# EUROPÄISCHE PATENTANMELDUNG

(11) **EP 1 384 543 A1**
(43) Veröffentlichungstag der Anmeldung: **28.01.2004**
(21) Anmeldenummer: 03015941.2
(22) Anmeldetag: 12.07.2003
(51) Int. Cl.: B23D 61/06, B27B 33/08, B23C 5/08

(54) **Kreissägeblatt**

(30) Priorität: 23.07.2002 DE 20211151 U; 23.04.2003 DE 20306358 U
(71) Anmelder: Peitz, Anton, 33161 Hövelhof (DE); Peitz, Michael, 33161 Hövelhof (DE)
(72) Erfinder: Peitz, Anton, 33161 Hövelhof (DE); Peitz, Michael, 33161 Hövelhof (DE)
(74) Vertreter: Rolf, Gudrun

(57) **Zusammenfassung**

Es wird ein Kreissägeblatt aus einem scheibenförmigen Grundkörper mit in dessen Umfang eingebrachten Ausnehmungen und darin angeordneten Sägezähnen aus Zahnkörpern mit Schneidköpfen zur Verfügung gestellt, welches die Lagerkosten vorzuhaltender Grundkörper und Sägezähne drastisch vermindert und gleichzeitig den Herstellungsprozess von unterschiedlich breiten Schlitzen deutlich beschleunigt, was dadurch erzeilt wird, dass das Maß der Dicke des Grundkörpers (2) größer ist als das Maß der Breite eines Sägezahnes (4) und dass die Sägezähne (4) von einer Mittelebene (5) des Grundkörpers (2) axial zueinander nach Außen versetzt in mindestens zwei zueinander parallelen Ebenen (6) angeordnet sind und sich die Kreisbahnen der Schneidköpfe (7) von Sägezähnen (4) benachbarter Ebenen (6) mindestens geringfügig überschneiden.

## Beschreibung

Die Erfindung betrifft ein Kreissägeblatt gemäß dem Oberbegriff des Hauptanspruchs.

Es sind Sägeblätter mit am Außenrand über ihren Umfang verteilten radialen Aussparungen mit dort eingesetzten Sägezähnen bekannt, DE 196 18 759 C2, deren Zähne einfach auswechselbar sind, welche aus einem sehr widerstandskräftigen Material wie Hartmetall oder Keramik gefertigt sind, sodass insgesamt hohe Werkzeugstandzeiten bei hohen Schnittgeschwindigkeiten erreicht werden können und nur kurze Maschinenstillstandszeiten erforderlich werden.

Nachteilig an dieser bekannten Art von Sägeblättern ist, dass für unterschiedlich breite Schnitte verschieden dicke Sägeblätter mit unterschiedlich dicken Grundkörpern und vor allen Dingen jeweils daran angepassten Sägezähnen vorgehalten werden müssen, wodurch sich der Aufwand für die Lagerhaltung unnötig vergrößert, da die unterschiedlichsten Sägezähne zur Verfügung gehalten werden müssen. Zwar ist es durch die Schwalbenschwanz- und die Stiftsicherungen mit den bekannten Sägeblättern möglich ein Herausfallen der Sägezähne auch bei größeren auftretenden Querkräften zu verhindern, sodass auch das Aufweiten eines Schlitzes durchführbar wird, jedoch ist dazu jeweils ein weiterer prozessverzögernder Arbeitsgang erforderlich.

Aufgabe der Erfindung ist es, ein Kreissägeblatt zur Verfügung zu stellen, welches die Lagerkosten vorzuhaltender Grundkörper und Sägezähne drastisch vermindert und gleichzeitig den Herstellungsprozess von unterschiedlich breiten Schlitzen deutlich beschleunigt.

Die Lösung dieser Aufgabe wird in Verbindung mit den Oberbegriffsmerkmalen erfindungsgemäß durch die im kennzeichnenden Teil des Hauptanspruchs 1 angegebene technische Lehre vermittelt.

Das Kreissägeblatt besteht aus einem scheibenförmigen Grundkörper mit in dessen Umfang eingebrachten Ausnehmungen und darin angeordneten Sägezähnen aus Zahnkörpern mit Schneidköpfen, wobei das Maß der Dicke des Grundkörpers größer ist als das Maß der Breite eines Sägezahnes und die Sägezähne von einer Mittelebene des Grundkörpers wechselweise axial zueinander nach außen versetzt in mindestens zwei zueinander parallelen Ebenen angeordnet sind, wobei der axiale Abstand der Sägezähne so gewählt ist, dass sich zumindest die seitlichen Schneidkanten der Schneidköpfe von Sägezähnen benachbarter Ebenen auf Kreisbahnen bewegen, die sich mindestens geringfügig überschneiden.

Diese Konstruktion ermöglicht es trotz der Verwendung von nur einer Sorte Sägezähnen Kreissägeblätter unterschiedlicher Schnittbreite zur Verfügung stellen zu können. Hierdurch werden die Lagerkosten drastisch reduziert, da nur unterschiedliche Grundkörper vorgehalten werden müssen, die jedoch mehrfach verwendet werden können, wodurch sich insgesamt ein erheblicher wirtschaftlicher Vorteil einstellt.

Vorteilhaft ist weiterhin, dass auch nur eine Art von Montage und Demontagewerkzeugen zur Verfügung gehalten werden müssen, sodass sich auch die Wartungs- und Instandhaltungskosten drastisch reduzieren. Weiterhin vermindert sich dadurch die Gefahr einer fehlerhaften Montage, sodass von der Tagesform abhängige Arbeitsresultate vollständig ausgeschlossen werden können.

Ein weiterer Vorteil besteht in der hohen Anzahl von über den Umfang verteilten Sägezähnen, beispielsweise können in einem Sägeblatt von nur 63 mm Grundkörperdurchmesser 10 Zähne und bei einem Grundkörperdurchmesser von 350 mm 66 Sägezähne eingesetzt sein, wodurch ein extrem vibrationsarmes Schneiden ermöglicht wird. Die möglichen Grenzwerte der Grundkörperdurchmesser liegen jedoch noch unter bzw. weit über diesen genannten Durchmessern.

Bei einem erfinderischen Kreissägeblatt mit in zwei parallelen Ebenen angeordneten Sägezähnen von 3 mm Breite lassen sich demnach Kreissägeblätter für Schnittbreiten bis zu 5,9 mm herstellen. Bei einer Anordnung der Sägezähne in drei zueinander parallelen Ebenen lässt sich eine mögliche Schnittbreite von bis zu 8,8 mm erzielen.

Weitere vorteilhafte Ausgestaltungen des Gegenstandes der Erfindung ergeben sich mit und in Kombination aus den nachfolgenden Unteransprüchen.

Gemäß einer besonders bevorzugten Ausführungsform der Erfindung ist das Maß eines axialen Versatzes zweier Sägezähne zweier benachbarter Ebenen kleiner als das Maß der Breite eines Schneidkopfes eines Sägezahnes, wodurch eine mindestens geringfügige Überschneidung der zueinander gewandten Schneiden der Schneidköpfe gewährleistet ist und ein Stehenbleiben eines mittleren Steges ausgeschlossen werden kann.

Bei einer weiteren sehr vorteilhaften Ausführungsform der Erfindung ist das Maß der Breite des Grundkörpers im Bereich einer Ausnehmung für einen Sägezahn mindestens bis auf das Maß der Breite eines Zahnkörpers reduziert, sodass die Herstellung der Ausnehmungen für die Sägezähne sich nicht von der bekannter Sägeblätter unterscheidet. Vielmehr kann dieser Bereich in vorteilhafter Weise für die Spanabfuhr optimiert ausgebildet sein.

Vorteilhaft ist es weiterhin, dass ein Schneidkopf seitliche Schneiden aufweist, welche sich axial über die seitliche Außenkontur des in der Dicke reduzierten Bereichs des Grundkörpers erstrecken, wodurch erreicht wird, dass nur die Schneidköpfe in Kontakt mit einem Werkstück kommen, sodass die Seitenflanken des Grundkörpers im Wesentlichen unbeansprucht bleiben. Die Seitenflanken des Grundkörpers können zusätzlich mit einer TiN-Beschichtung versehen sein, welche das Betriebsverhalten des Kreissägeblattes weiterhin verbessert, da sich keine Späne zwischen einem Werkstück und dem Werkzeug festsetzen können.

Mit einer einzigen Art und Größe von Sägezähnen können auf diese Weise Kreissägeblätter unterschiedlichster Schnittbreite mit einer geringfügig schmaleren Schnittbreite als dem Produkt des Maßes der Breite eines Schneidkopfes mit der Anzahl der parallelen, mit Sägezähnen besetzten Ebenen hergestellt werden.

Vorteilhaft ist es des Weiteren, dass mehrere Kreissägeblätter spaltfrei nebeneinander zu einer beliebig breiten Schnittbreite angeordnet werden können, wobei die in einer Ebene zu einem benachbarten Kreissägeblatt angeordneten Sägezähne mit ihren Schneidköpfen in den in der Breite reduzierten freien Bereich des benachbarten Kreissägeblattes eingreifen können, sodass sich die benachbarten Sägeblätter nicht gegenseitig behindern.

Das erfinderische Kreissägeblatt eignet sich nicht nur für mechanisch-kraft- und/oder formschlüssig in die Ausnehmungen eingesetzten Sägezähne sondern ebenfalls für stoffschlüssig mit dem Grundkörper verbundene Sägezähne, wobei solche Kreissägeblätter mit aufgeschweißten oder aufgelöteten Sägezähnen erheblich kostenintensiver und aufwändiger herzustellen und zu reparieren sind, falls dies überhaupt möglich ist.

Nachfolgend sind einige Ausführungsbeispiele der Erfindung anhand der Zeichnungen näher beschrieben. Es zeigen:

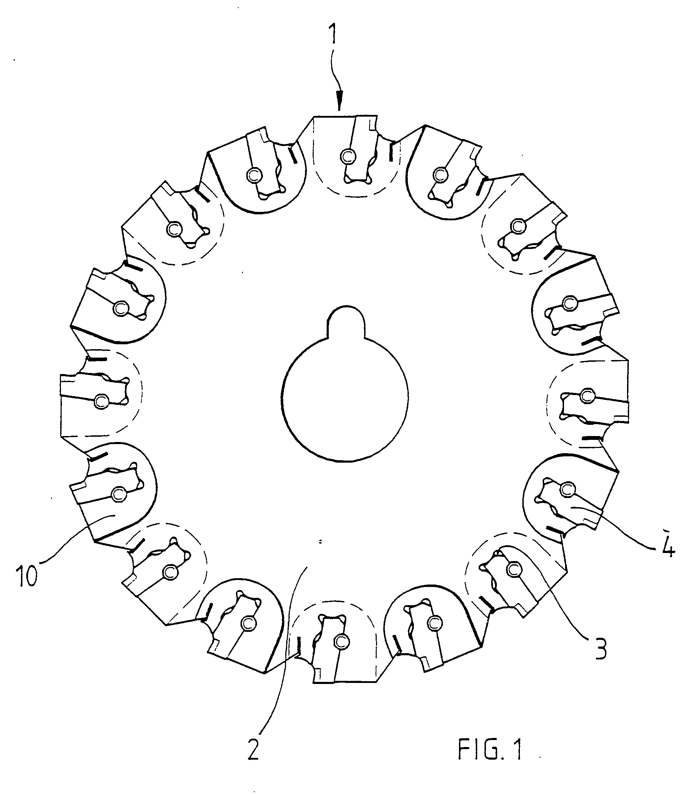

- Fig. 1: ein Kreissägeblatt in Seitenansicht,
- Fig. 2: das Kreissägeblatt gem. Fig. 1 in einer Vorderansicht,
- Fig. 3: eine Vorderansicht eines Kreissägeblattes mit in drei Ebenen angeordneten Sägezähnen,
- Fig. 4: eine weitere Vorderansicht eines Kreissägeblattes mit in drei Ebenen angeordneten Sägezähnen,
- Fig. 5: eine Vorderansicht von zwei zusammengesetzten Kreissägeblättern gem. der Fig. 2, und
- Fig. 6: eine vergrößerte Darstellung eines bekannten Sägezahnes.

Das Kreissägeblatt 1 besteht aus einem Grundkörper 2 mit etwa radialen Ausnehmungen 3 für die Sägezähne 4, die in mindestens zwei zueinander parallelen Ebenen 6 angeordnet sind, wobei diese Anordnung bevorzugterweise wechselweise erfolgt.

Im Bereich der Ausnehmungen 3 für die Sägezähne 4 ist das Maß der Dicke des Grundkörpers 2 auf das Maß der Breite des Zahnkörpers 8 eines Sägezahnes 4 reduziert, wobei mindestens eine Schneide eines Schneidkopfes 7 eines Sägezahnes 4 geringfügig über die Körperkontur des Grundkörpers 2 hervorsteht. Die zueinander gewandten Schneiden der Schneidköpfe benachbarter Ebenen 6 bewegen sich auf Kreisbahnen, die sich mindestens geringfügig überschneiden, sodass bei einem Sägevorgang das Stehenbleiben eines mittleren Steges ausgeschlossen werden kann.

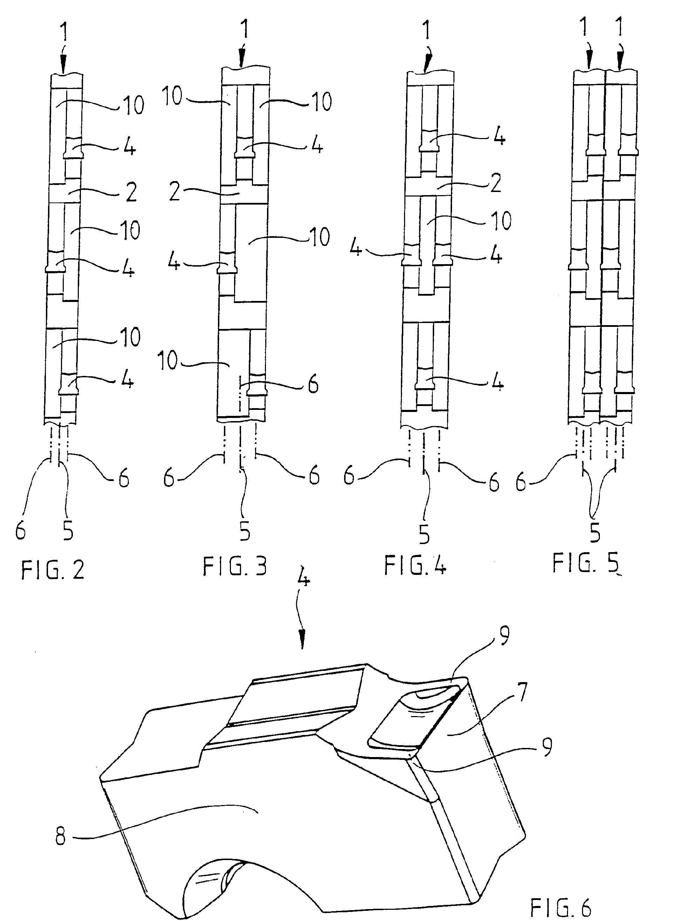

Wie in den Fig. 3 und 4 dargestellt, können die Sägezähne 4 auch in mehr als zwei Ebenen 6 angeordnet werden, wodurch die Vibrationsarmut abnimmt. Eine Schwingungsanregung wird dagegen deutlich unterdrückt, wenn, wie in Fig. 5 dargestellt, zur Verbreiterung eines Sägeschlitzes zwei oder mehr Kreissägeblätter mit in nur zwei parallelen Ebenen 6 angeordneten Sägezähnen 4 nebeneinander angeordnet werden.

Bei der Verwendung eines 3 mm breiten Sägezahnes 4 lassen sich Grundkörper bis zu einer Dicke von etwa 5,8 mm herstellen, wobei jeder gewünschte Zwischenwert verwirklicht werden kann.

Fig. 6 zeigt einen stark vergrößerten Zahn mit seinem bekannten komplexen Aufbau, wobei die Erfindung nicht auf die Verwendung genau dieser Sägezähne beschränkt ist.

## Patentansprüche

1. Kreissägeblatt (1) aus einem scheibenförmigen Grundkörper (2) mit in dessen Umfang eingebrachten Ausnehmungen (3) und darin angeordneten Sägezähnen (4) aus Zahnkörpern (8) mit Schneidköpfen (7), **dadurch gekennzeichnet, dass** das Maß der Dicke des Grundkörpers (2) größer ist als das Maß der Breite eines Sägezahnes (4) und dass die Sägezähne (4) von einer Mittelebene (5) des Grundkörpers (2) axial zueinander nach Außen versetzt in mindestens zwei zueinander parallelen Ebenen (6) angeordnet sind und sich die Kreisbahnen der Schneidköpfe (7) von Sägezähnen (4) benachbarter Ebenen (6) mindestens geringfügig überschneiden.

2. Kreissägeblatt nach Anspruch 1, **dadurch gekennzeichnet, dass** das Maß eines axialen Versatzes zweier Sägezähne (4) zweier benachbarter Ebenen (6) kleiner ist als das Maß der Breite eines Schneidkopfes (7) eines Sägezahnes (4).

3. Kreissägeblatt nach einem der vorgenannten Ansprüche, **dadurch gekennzeichnet, dass** das Maß der Breite des Grundkörpers (2) im Bereich (10) einer Ausnehmung (3) für einen Sägezahn (4) auf mindestens das Maß der Breite eines Zahnkörpers (8) reduziert ist.

4. Kreissägeblatt nach einem der vorgenannten Ansprüche, **dadurch gekennzeichnet, dass** ein Schneidkopf (7) seitliche Schneiden (9) aufweist, die sich axial über die seitliche Außenkontur des in der Dicke reduzierten Bereichs (10) des Grundkörpers (2) erstrecken.

5. Kreissägeblatt nach einem der vorgenannten Ansprüche, **dadurch gekennzeichnet, dass** mit einer Art und Größe von Sägezähnen (4) Kreissägeblätter (1) unterschiedlicher Schnittbreite mit einer geringfügig schmaleren Schnittbreite als dem Produkt des Maßes der Breite eines Schneidkopfes (7) mit der Anzahl der parallelen, mit Sägezähnen (1) besetzten Ebenen (6) herstellbar sind.

6. Kreissägeblatt nach einem der vorgenannten Ansprüche, **dadurch gekennzeichnet, dass** mehrere Kreissägeblätter (1) spaltenfrei nebeneinander zu einer beliebig breiten Schnittbreite anzuordnen sind, wobei die in einer Ebene (6) zu einem benachbarten Kreissägeblatt (1) angeordneten Sägezähne (4) mit ihren Schneidköpfen (7) in den in der Breite reduzierten freien Bereich (10) des benachbarten Kreissägeblattes (1) eingreifen.

7. Kreissägeblatt nach einem der vorgenannten Ansprüche, **dadurch gekennzeichnet, dass** die Sägezähne (4) mechanisch kraft- und/oder formschlüssig in einer Ausnehmung (3) gehalten oder stoffschlüssig am Grundkörper (2) angeordnet sind.
